**Europäisches Patentamt**

**European Patent Office**

**Office européen des brevets**

(19)

(11) Veröffentlichungsnummer: **0 107 179**
**A2**

# (12) EUROPÄISCHE PATENTANMELDUNG

(21) Anmeldenummer: 83110444.3

(22) Anmeldetag: 19.10.83

(51) Int. Cl.³: **B 01 D 53/04, B 01 J 19/04**

(30) Priorität: 21.10.82 DE 3238969

(43) Veröffentlichungstag der Anmeldung: 02.05.84
Patentblatt 84/18

(84) Benannte Vertragsstaaten: **AT BE CH DE FR GB IT LI LU NL SE**

(71) Anmelder: **Preussag AG Kunststoffe u. Armaturen, D-3150 Peine (DE)**

(72) Erfinder: **Hübener, Mark, Am Spick 5, D-4005 Meerbusch 3 (DE)**

(74) Vertreter: **Schaumburg, Schulz-Dörlam & Thoenes, Mauerkircherstrasse 31 Postfach 86 07 48, D-8000 München 86 (DE)**

(54) Vorrichtung zum Zerlegen eines Gasgemisches durch selektive Adsorption einer Gemischfraktion.

(57) Die Erfindung betrifft eine Druckwechseladsorptionsanlage zum Zerlegen eines Gasgemisches, umfassend mehrere Adsorptionskammern (10). Die Einlässe (22) und die Auslässe (24) der Klammern (10) sind mit ersten und zweiten Steueröffnungen (32 bzw. 34) in einer eine Einlaßkammer für das Gasgemisch begrenzenden feststehenden Steuerscheibe (26) verbunden. Jeder Kammer (10) ist eine mit einer Produktgasleitung (68) verbundene dritte Steueröffnung (58) in der feststehenden Steuerscheibe (26) zugeordnet, die ferner eine mit einer Restgasleitung (24) verbundene Restgasöffnung (72) aufweist. In einer innerhalb der Einlaßkammer (46) angeordneten, an der feststehenden Steuerscheibe anliegenden drehbaren Steuerscheibe (38) sind zwei mit der Einlaßkammer (46) verbundene Einlaßkanäle (52) und zwei Verbindungskanäle (54, 70) vorgesehen, von denen der eine während des Adsorptionstaktes die jeder Kammer (10) zugeordnete zweite und dritte Steueröffnung (34, 58) miteinander verbindet, während der andere Verbindungskanal während des Desorptiontaktes die jeder Kammer (10) zugeordnete erste Steueröffnung (32) mit der Restgasöffnung (72) verbindet.

## Vorrichtung zum Zerlegen eines Gasgemisches durch selektive Adsorption einer Gemischfraktion

Die Erfindung betrifft eine Vorrichtung zum Zerlegen eines Gasgemisches durch selektive Adsorption einer Gemischfraktion, umfassend eine Mehrzahl von ein Adsorptionsmittel enthaltenden Kammern mit jeweils einem Einlaß für das Gasgemisch und einem von dem Einlaß durch das Adsorptionsmittel getrennten Auslaß für die nicht adsorbierte Gemischfraktion, wobei die Kammern zyklisch nacheinander in einem Adsorptionstakt mit dem Einlaß an eine Gasquelle und mit dem Auslaß an eine Produktgasleitung und während eines Desorptionstaktes mit ihrem Einlaß bei gleichzeitiger Sperrung des jeweiligen Auslasses an eine Restgasleitung anschließbar sind.

Eine Druckwechseladsorptionsanlage der vorstehend genannten Art zur Herstellung von an Sauerstoff angereichertem Gas aus Luft ist beispielsweise aus der DE-OS 26 51 123 bekannt. Die dort beschriebene Vorrichtung umfaßt drei Kammern, die durch Ringleitungen und eine Vielzahl von Ventilen miteinander verbindbar sind. Während des Adsorptionstaktes wird komprimierte Luft in die jeweilige Kammer eingeführt. Die Desorption erfolgt durch Anlegen eines Vakuums an die jeweilige Kammer. Zwischen dem Adsorptionstakt und dem Desorptionstakt erfolgt zwischen zwei aufeinanderfolgenden Kammern ein Druckausgleich, um die Beanspruchung der Pumpen und Ventile beim Druckwechsel zu vermindern. Diese bekannte Vorrichtung hat den Nachteil, daß sie eine große Anzahl von Ventilen und lange Verbindungsleitungen benötigt. Die große Anzahl von Ventilen verursacht einen entsprechenden Steueraufwand und führt zu hohen Herstellungskosten für die Vorrichtung.

Aus der DE-As 19 63 876 ist ferner eine Vorrichtung zur selektiven Adsorption von Bestandteilen eines Gasgemisches bekannt, bei welcher mehrere zylindrische Adsorptionskammern vorgesehen sind, die gemeinsam um eine Mittelachse drehbar angeordnet und an ihren oberen und unteren Enden jeweils mit einer drehbaren Steuerscheibe versehen sind. Jeder dieser Steuerscheiben ist eine feststehende Steuerscheibe zugeordnet, welche die Anschlüsse zur Zufuhr des zu zerlegenden Gasgemisches bzw. zur Ableitung der getrennten Gasfraktionen trägt. Die drehbare Anordnung der Adsorptionskammern erfordert einen relativ großen technischen Aufwand sowie einen erheblichen Energieaufwand für den Betrieb der Vorrichtung.

Eine ähnliche Einrichtung ist auch aus der DE-AS 15 44 036 bekannt, bei welcher aber die Behälter stillstehen und die Zufuhr des Gasgemisches bzw. die Ableitung der Gasfraktionen durch Drehschieber gesteuert wird, wobei die Zuleitungsrohre über Drehkupplungen an den Drehschieber angeschlossen sind. Diese Drehkupplungen sind insbesondere bei wechselndem Druck relativ aufwendig und fehlerträchtig.

Der Erfindung liegt die Aufgabe zugrunde, eine Vorrichtung der eingangs genannten Art anzugeben, die auch bei einer größeren Anzahl von Behältern einfach und kompakt aufgebaut ist, einen geringen steuerungstechnischen Aufwand erfordert, relativ geringe Herstellungskosten verursacht und einen hohen Wirkungsgrad besitzt.

Diese Aufgabe wird erfindungsgemäß dadurch gelöst, daß die Einlässe und Auslässe der Kammern mit ersten und zweiten Steueröffnungen verbunden sind, die in einer achsnormalen Steuerfläche einer feststehenden Steuerscheibe ausgebildet sind, die eine Einlaßkammer für das Gasgemisch begrenzt, daß jeder Kammer eine mit der Produktgasleitung verbundene dritte Steueröffnung in der feststehenden Steuerscheibe zugeordnet ist, daß in der feststehenden Steuerscheibe eine mit der Restgasleitung verbundene Rest-gasöffnung ausgebildet ist, daß der feststehenden Steuerscheibe eine gegenüber dieser drehbare und innerhalb der Einlaßkammer angeordnete Steuerscheibe zugeordnet ist, die mit ihrer Steuerfläche dicht abschließend an der feststehenden Steuerscheibe anliegt, und daß in der drehbaren Steuerscheibe mindestens zwei deren Steuerfläche mit der Einlaßkammer verbindender Einlaßkanal und mindestens zwei Verbindungskanäle vorgesehen sind, deren beide Enden jeweils in der Steuerfläche der drehbaren Steuerscheibe liegen und von denen der eine (erster Verbindungskanal) während des Adsorptionstaktes die jeder Kammer zugeordnete zweite und dritte Steueröffnung miteinander verbindet, während der andere (zweite) Verbindungskanal während des Desorptionstaktes die jeder Kammer zugeordnete erste Steueröffnung mit der Restgasöffnung verbindet.

Bei der erfindungsgemäßen Vorrichtung sind die Kammern, die Produktgasleitung und die Restgasleitung mit der feststehenden Steuerleitung verbunden, so daß in diesem Bereich keine bewegten Teile anfallen. Da sich die drehbare Steuerscheibe innerhalb der Einlaßkammer bewegt, die mit dem zu zerlegenden Gasgemisch gefüllt ist, genügt eine einfache Bohrung in der drehbaren Steuerscheibe als Einlaßkanal, um das zu zerlegende Gasgemisch den Kammern zuzuführen. Eine störanfällige Drehkupplung ist nicht erforderlich. Eine Abdichtung zwischen gegeneinander bewegten Teilen ist somit nur im Bereich der beiden aneinander anliegenden Steuerfläche der feststehenden und der beweglichen Steuerscheibe erforderlich.

Zum Antrieb der drehbaren Steuerscheibe genügt ein Antriebsmotor relativ geringer Leistung, der ebenfalls in der Einlaßkammer untergebracht werden kann, so daß auch hier sich keinerlei Abdichtungsprobleme ergeben.

Vorzugsweise sind die Kammern kreisförmig in gleichmäßigen Winkelabständen um die Steuerscheiben herum angeordnet. Hierbei erhält man auch bei einer größeren Anzahl von Behältern eine relativ kompakte Anlage. In diesem Fall ist die Restgasöffnung vorzugsweise von einer axialen Bohrung in der feststehenden Steuerscheibe gebildet, an die sich nach der der drehbaren Steuerscheibe entgegengesetzten Seite ein die Restgasleitung bildendes Rohr anschließt. Koaxial zu dem zylindrischen Rohr ist ein durchmessergrößerer Produktgasbehälter angeordnet, der an seinem mit der feststehenden Steuerscheibe verbundenen Ende mit allen dritten Steueröffnungen über die feststehende Steuerscheibe achsparallel durchsetzende Auslaßkanäle verbunden ist und an den die mit einem Ventil absperrbare Produktgasleitung angeschlossen ist. Aus sämtlichen Kammern strömt also die abgetrennte Gasfraktion oder das Produktgas zunächst in einen Sammelbehälter, aus dem dann das Produktgas abgezogen werden kann. Vorzugsweise sind die dritten Steueröffnungen mit dem Produktgasbehälter über Rückschlagventile verbunden, so daß am Übergang zwischen den verschiedenen Takten bei einer Druckverminderung in den Kammern kein Produktgas aus dem Produktgasbehälter zurück in die Kammern strömen kann.

Vorzugsweise sind die ersten, zweiten und dritten Steueröffnungen jeweils von konzentrisch zur Drehachse der drehbaren Steuerscheibe kreisbogenförmig gekrümmten, an sich bekannten Steuerschlitzen gebildet. Die Bogenlänge der Steuerschlitze bestimmt dabei die relative Länge des jeweiligen Taktes innerhalb eines Arbeitszyklus.

Die ersten, zweiten und dritten Steueröffnungen sind vorzugsweise jeweils innerhalb eines einer Kammer zugeordneten Kreissektors auf Kreisbogen mit unterschiedlichen Radien angeordnet, wobei die Steueröffnungen vorzugsweise in der Reihenfolge ihrer oben genannten Bezifferung von radial innen nach radial außen aufeinanderfolgen. Auf diese Weise gewinnt man für die die zweiten und dritten Steueröffnungen miteinander verbindenden ersten Verbindungskanäle in dem radial äußeren Bereich der drehbaren Steuerscheibe etwas mehr Platz, während die von einfachen achsparallelen Bohrungen gebildeten Einlaßkanäle bequem auch in dem radial inneren Teil der drehbaren Steuerscheibe untergebracht werden können.

Ab einer bestimmten Anlagegröße kann es aber auch sinnvoll sein, die Steueröffnungen radial von außen nach innen folgen zu lassen bei großem Durchmesser der äußeren Öffnungen, weil die ein- bzw. ausströmende Gasmenge vor der jeweiligen Adsorptionskammer ein Vielfaches der Menge hinter der Adsorptionskammer ist.

sehen, wobei n eine ganze Zahl bezeichnet. Vorzugsweise ist n mindestens gleich 2. Zumindest für n 2 läßt sich bei dieser Anordnung erreichen, daß sich die Arbeitstakte der verschiedenen Kammern so überlappen, daß stets mindestens eine Kammer im Adsorptionstakt arbeitet und damit Produktgas erzeugt. Bei einer symmetrischen Anordnung mit beispielsweise vier Kammern dagegen würden sich stets zwei Kammern im Adsorptionstakt und zwei im Desorptionstakt befinden. Beim Wechsel zwischen Adsorptiontakt und Desorptionstakt wäre für eine gewisse Totzeit der Ausstoß von Produktgas unterbrochen. Dies wird durch die erfindungsgemäße Lösung verhindert. Dabei ist der Ausstoß an Produktgas umso gleichmäßiger, je mehr Kammern angeschlossen sind, wobei natürlich die Kammeranzahl nach oben hin durch die Geometrie der Anordnung begrenzt ist.

Vorzugsweise erstrecken sich die zweiten Steuerschlitze , an welche die Auslässe der Kammern angeschlossen sind, über einen größeren Winkelbereich als die ersten und dritten Steuerschlitze. Dies gibt die Möglichkeit, das gegen Ende des Adsorptiontaktes angefallene Produktgas auch nach dem Schließen des Einlasses der jeweiligen Kammer noch vollständig abzuziehen. Ferner besteht durch diese Anordnung die Möglichkeit, einen Druckausgleich zwischen zwei im Zyklus aufeinanderfolgenden Kammern durchzuführen, wenn der Abstand zwischen zwei in Drehrichtung aufeinanderfolgenden zweiten Steuerschlitzen kleiner als der in Drehrichtung gemessene Durchmesser der den zweiten Steuerschlitzen zugeordneten Öffnung des ersten Verbindungskanales in der drehbaren Steuerscheibe ist. In dem Augenblick, in dem diese Öffnung des ersten Verbindungskanales zwei aufeinanderfolgende Steuerschlitze gleichzeitig teilweise überdeckt, kann ein Druckausgleich zwischen der Kammer,

0107179

in der gerade der Adsorptionstakt beendet wurde und die sich auf einem relativ hohen Druck befindet, und der im Zyklus nachfolgenden Kammer erfolgen, die vorher desorbiert wurde und in der ein relativ niedriger Druck herrscht. Der Druckausgleich erfolgt dabei mit Produktgas, so daß die Kammer vor Beginn des Adsorptionstaktes bereits teilweise mit Produktgas gefüllt ist. Dadurch läßt sich der Wirkungsgrad der Anlage deutlich steigern.

Gemäß einem weiteren Merkmal der Erfindung wird vorgeschlagen, daß der Produktgasbehälter koaxial von einem zylindrischen Zwischenspeicher umgeben ist, der an seinem der feststehenden Steuerscheibe nahen Ende über in dieser ausgebildete weitere Kanäle jeweils mit vierten und fünften Steueröffnungen in der Steuerfläche der feststehenden Steuerscheibe verbunden ist, die jeweils in dem Winkelbereich ausgebildet sind, um den die zweiten Steuerschlitze über die ersten und dritten Steuerschlitze hinausragen, wobei der Zwischenspeicher mit der Produktgasleitung verbindbar ist. Der erste Verbindungskanal weist dabei einen Verlängerungsabschnitt auf, der vor Beginn und nach Abschluß des Adsorptionstaktes einer Kammer die zweite Steueröffnung mit der vierten bzw. fünften Steueröffnung verbindet. Das bedeutet, daß eine Kammer am Ende ihres Adsorptionstaktes nach dem Schließen des Kammereinlasses und vor Beginn des Druckausgleiches mit der dem Zyklus nachfolgenden Kammer noch Produktgas an den Zwischenspeicher abgibt, in dem ein etwas geringerer Druck als in dem Produktgasbehälter herrscht. Umgekehrt erhält die im Zyklus nachfolgende Kammer nach erfolgtem Druckausgleich und unmittelbar vor Beginn des Adsorptionstaktes Produktgas aus dem Zwischenspeicher, wodurch der Druck in dieser Kammer nochmals etwas angehoben wird, so daß der für die Adsorption erforderliche Betriebsdruck zu Beginn des Adsorptionstaktes schneller erreicht wird.

Bei einer weiteren Ausführungsform der Erfindung kann der Zwischenspeicher zum Spülen der jeweiligen Kammer vor bzw. während des Desorptionstaktes benützt werden, indem in bzw. auf der drehenden Steuerscheibe jeweils eine weitere Verbindung zwischen den vierten und fünften Steueröffnungen auf der einen und den zweiten Steueröffnungen auf der anderen Seite installiert wird, wie dies noch näher erläutert wird.

Die Erfindung betrifft ferner ein Verfahren zum Zerlegen eines Gasgemisches durch selektive Adsorption einer Gemischfraktion mittels einer Mehrzahl von ein Adsorptionsmittel enthaltenden Kammern, in die jeweils während eines Adsorptionstaktes das Gasgemisch unter Druck eingeleitet wird bei gleichzeitiger Ableitung der nicht adsorbierten Gasfraktion und aus denen jeweils während eines Desorptionstaktes durch Druckerniedrigung das adsorbierte Restgas wieder entfernt wird, wobei die Kammern zyklisch nacheinander in den Adsorptions-Desorptionskreislauf eingeschaltet werden. Bei einem solchen Verfahren läßt sich der für den Betrieb der Anlage erforderliche Energieaufwand erfindungsgemäß dadurch verringern, daß der Druck in den Kammern während einer ersten Desorptionsphase auf annähernd Atmosphärendruck und in einer zweiten Desorptionsphase unter Atmosphärendruck abgesenkt wird und daß die Druckabnahme während der ersten Desorptionsphase in einer Kammer zur Erzeugung des Unterdruckes in der im Zyklus vorausgegangenen Kammer verwendet wird.

Dieses Verfahren läßt sich sowohl mit einer Anlage durch-

- 9 -

0107179

führen, die einzelne Ventile verwendet, als auch besonders vorteilhaft mit einer Anlage der vorher beschriebenen Art, indem in beiden Fällen das ausströmende Restgas während der ersten Desorptionsphase durch die Düse einer Gasstrahlpumpe geleitet wird, deren Saugseite gleichzeitig mit der Einlaßseite der im Zyklus vorausgegangenen Kammer verbunden wird. Bei einer Anlage der vorstehend beschriebenen Art bedeutet dies, daß der zweite Verbindungskanal von dem Eintritts- und dem Austrittsrohr der Gasstrahlpumpe gebildet ist, deren Sauganschluß mit einer weiteren den ersten Steuerschlitzen zugeordneten Öffnung in der Steuerfläche der drehbaren Steuerscheibe verbunden ist, wobei der Abstand dieser Öffnung von der Eintrittsöffnung des Eintrittsrohres mindestens gleich dem Abstand zwischen zwei aufeinanderfolgenden ersten Steuerschlitzen und der Abstand von der in Drehrichtung nachfolgenden Öffnung des Einlaßkanals mindestens gleich der Bogenlänge eines ersten Steuerschlitzes ist.

Weitere Merkmale und Vorteile der Erfindung ergeben sich aus der folgenden Beschreibung, welche in Verbindung mit den beigefügten Zeichnungen die Erfindung anhand von Ausführungsbeispielen erläutert. Es zeigen:

Fig. 1 bis 3    jeweils einen schematischen Axialschnitt durch eine erfindungsgemäße Vorrichtung in verschiedenen Betriebszuständen derselben,

Fig. 4    eine Draufsicht auf die Steuerfläche der feststehenden Steuerscheibe einer konkreten Ausführungsform einer Steuerscheibenanordnung für eine erfindungsgemäße Vorrichtung mit fünf Adsorptionskammern,

0107179

Fig. 5        eine Draufsicht auf die Steuerfläche
             der zu der feststehenden Steuerscheibe
             gemäß Fig. 4 gehörenden drehbaren
             Steuerscheibe,

Fig. 6        einen die Achse enthaltenden Schnitt
             durch die gesamte Steuerscheibenanordnung längs Linie VI-VI in den
             Fig. 4 und 5,

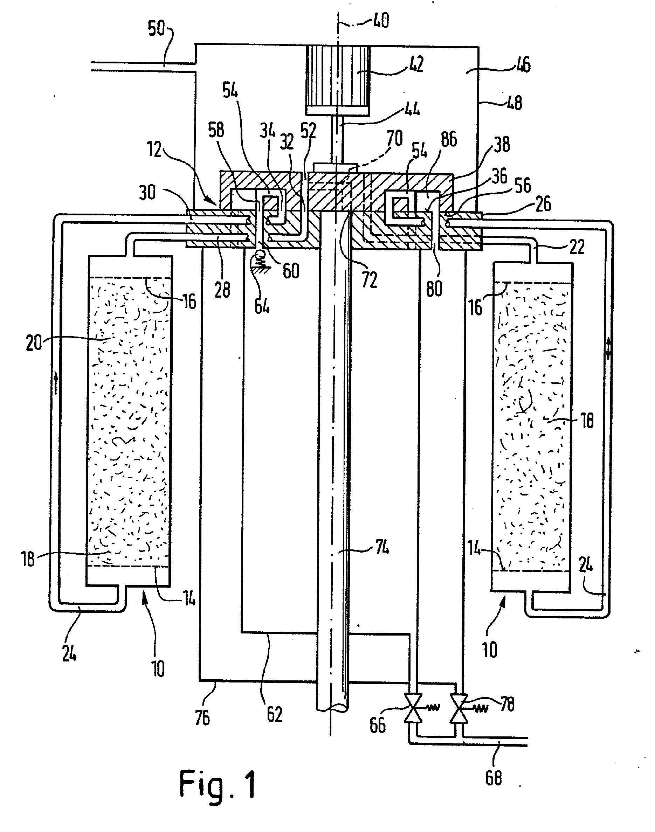

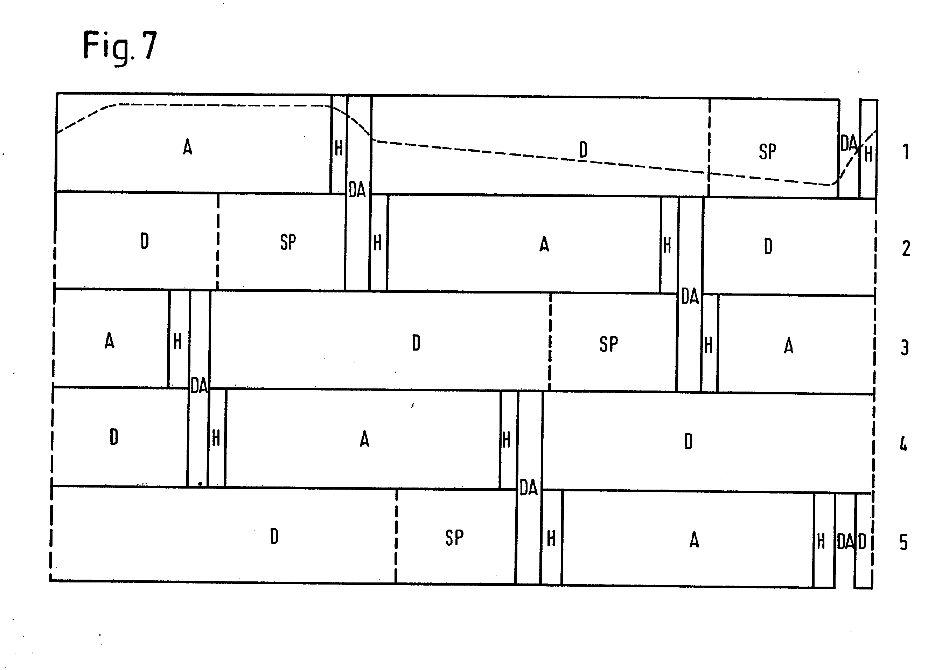

Fig. 7        ein Diagramm zur Erläuterung der Arbeitstakte bei einer Vorrichtung mit fünf
             Adsorptionskammern gemäß den Fig. 1 bis 6,

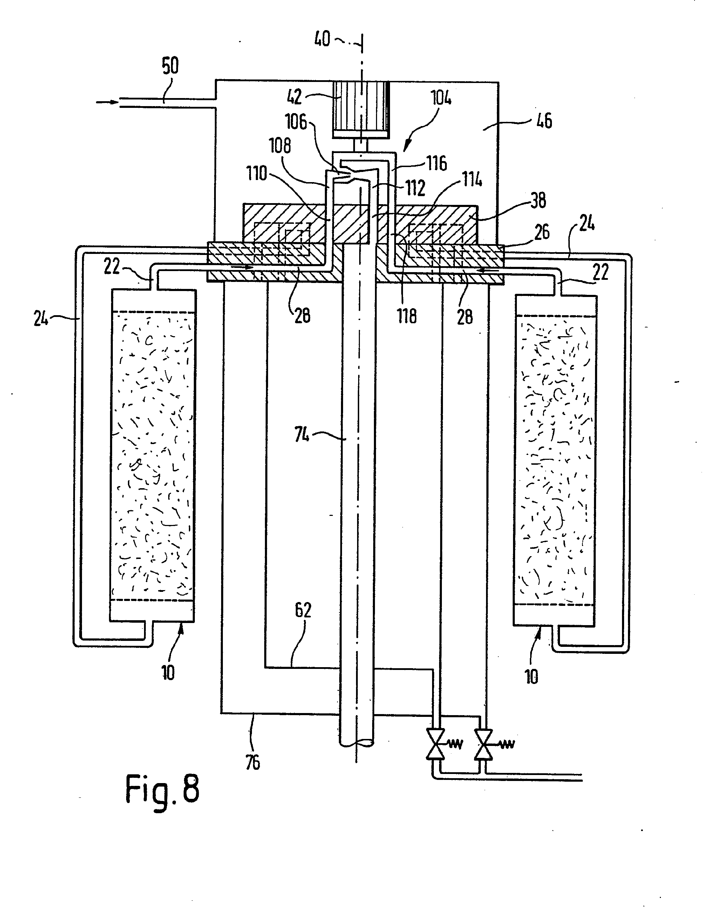

Fig. 8        eine den Fig. 1 bis 3 entsprechende Darstellung einer weiteren Ausführungsform
             der Erfindung,

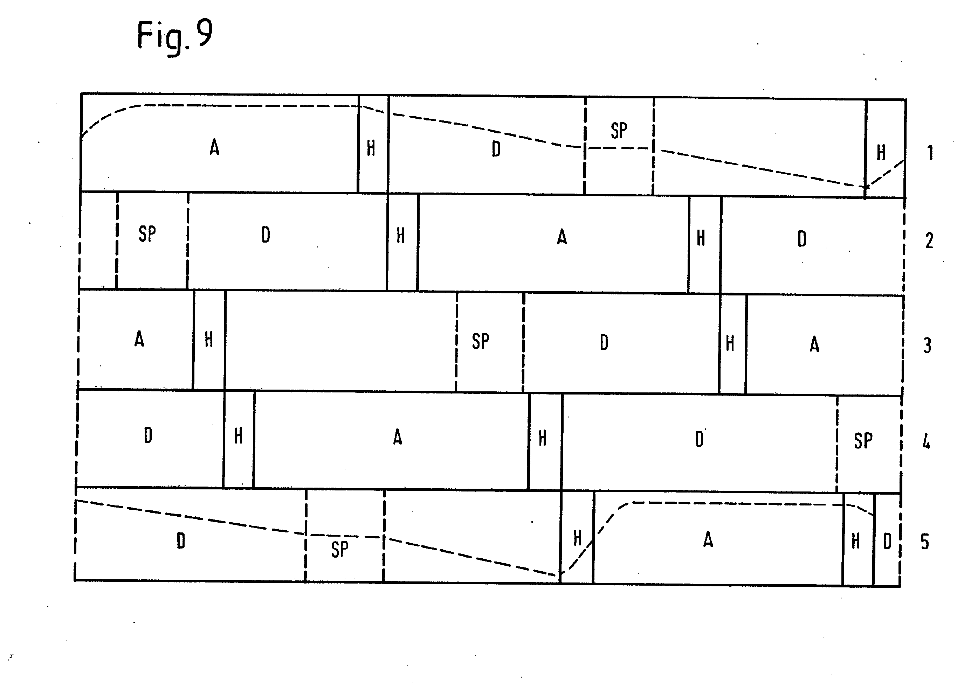

Fig. 9        ein Diagramm der Arbeitstakte für die in
             der Fig. 8 dargestellte Vorrichtung,

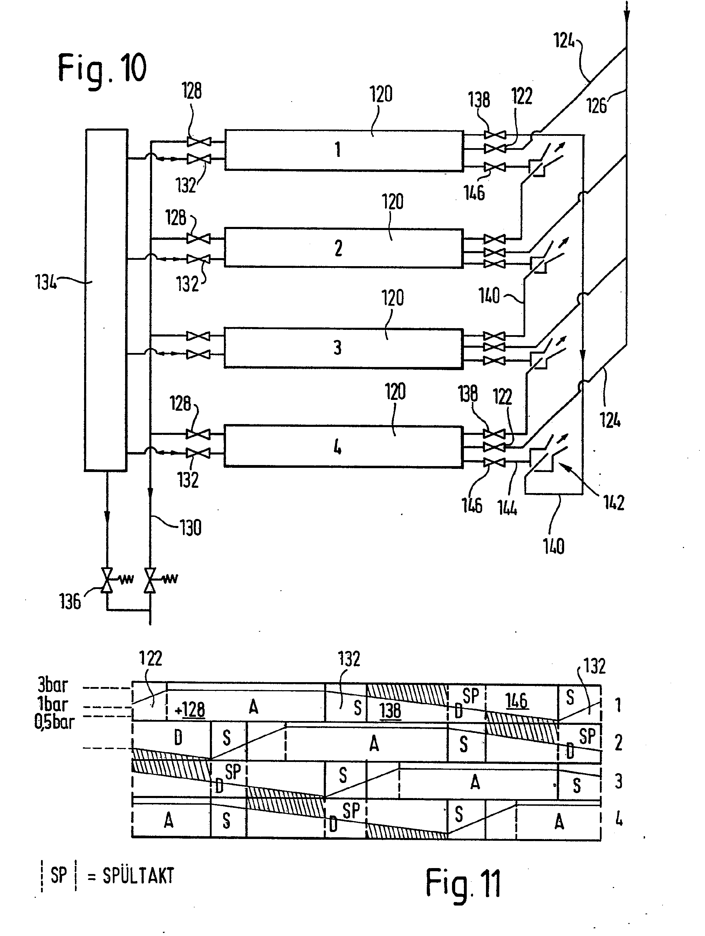

Fig. 10       eine schematische Darstellung einer
             weiteren erfindungsgemäßen Vorrichtung,

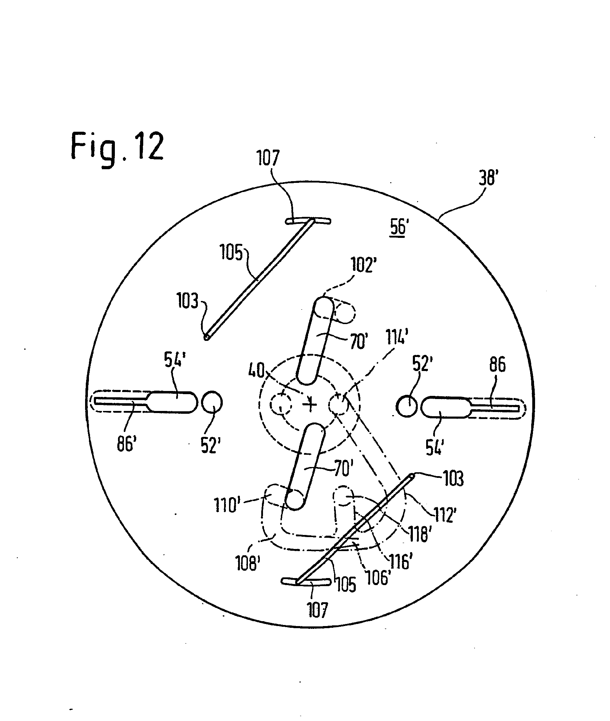

Fig. 11       ein Diagramm zur Darstellung der Arbeitstakte bei der in der Fig. 10 dargestellten
             Vorrichtung,

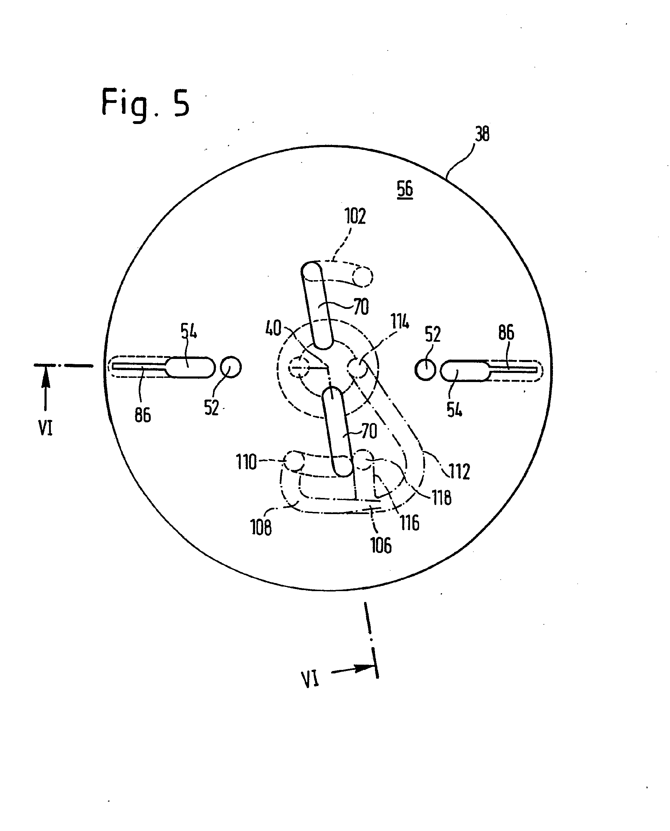

Fig. 12       eine der Fig. 5 entsprechende Ansicht der
             drehbaren Steuerscheibe, jedoch mit Verbindungskanälen für die Durchführung
             eines Spültaktes.

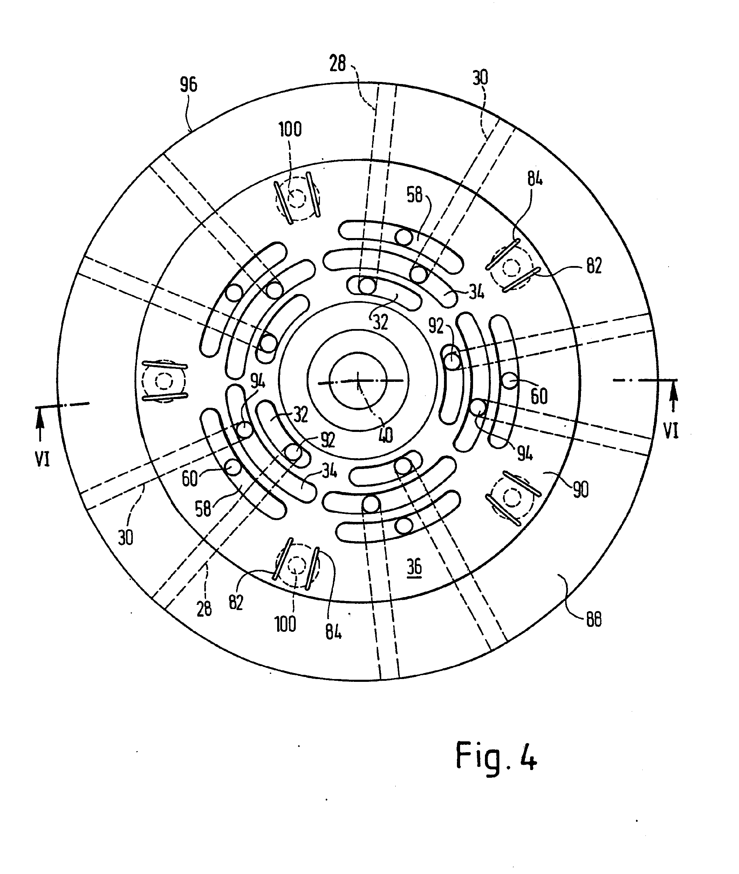

Die in der Fig. 1 in einem schematischen Schnitt dargestellte Druckwechsel-Adsorptionsvorrichtung umfaßt eine Mehrzahl von Adsorptionskammern 10, die mit gleichmäßigen Winkelabständen im Kreis um eine Steuerscheibenanordnung 12 herum angeordnet sind. Bei den Adsorptionskammern handelt es sich um aufrechtstehende zylindrische Behälter, in denen zwischen zwei Siebböden 14 und 16 ein Adsorptionsmittel 18, beispielsweise ein Zeolith, sowie ein Trocknungsmittel 20, beispielsweise Silikagel, angeordnet sind. Die oberen Enden der Kammern 10 sind jeweils über eine Einlaßleitung 22 und die unteren Enden der Kammern 10 über eine Auslaßleitung 24 an eine feststehende Steuerscheibe 26 der Steuerscheibenanordnung 12 angeschlossen. Der genaue Aufbau der feststehenden Steuerscheibe wird später anhand der Fig. 4 und 5 noch genauer beschrieben. Die Einlaßleitungen 22 und die Auslaßleitungen 24 sind über innerhalb der feststehenden Steuerscheibe 26 verlaufende Kanäle oder Bohrungen 28 bzw. 30 mit ersten bzw. zweiten Steueröffnungen 32 bzw. 34 verbunden, die in der nach oben weisenden achsnormalen Steuerfläche 36 der feststehenden Steuerscheibe 26 ausgebildet sind.

Auf der Steuerfläche 36 der stehenden Steuerscheibe 26 liegt eine bewegliche Steuerscheibe 38, die um eine Mittelachse 40 drehbar ist und von einem Antriebsmotor 42 über über eine Welle 44 angetrieben wird. Die drehbare Steuerscheibe 38 und der Antriebsmotor 42 sind innerhalb einer Einlaßkammer 46 angeordnet, die von einer druckfesten Haube 48 gebildet ist und an ihrer Unterseite von der feststehenden Steuerscheibe 26 begrenzt wird, mit der sie beispielsweise lösbar verbunden ist. Die Einlaßkammer 46 weist einen Einlaß 50 für das zu trennende Gasgemisch auf.

In der drehenden Steuerscheibe 38 sind mindestens zwei laßkanäle 52 in Form  von die drehende Steuerscheibe 38

0107179

achsparallel durchsetzenden Bohrungen ausgebildet, die bei einer geeigneten Stellung der drehenden Steuerscheibe 38 relativ zur stehenden Steuerscheibe 26 die Einlaßkammer 46 mit den ersten Steueröffnungen 32 verbindet, wie dies in der Fig. 1 für die linke Adsorptionskammer 10 dargestellt ist.

In der drehenden Steuerscheibe 38 sind ferner mindestens zwei erste Verbindungskanäle 54 ausgebildet, deren beide Endöffnungen in der der Steuerfläche 36 der feststehenden Steuerscheibe 26 zugewandten Steuerfläche 56 der drehenden Steuerscheibe 38 derart angeordnet sind, daß sie die zweiten Steueröffnungen 34 mit dritten Steueröffnungen 58 in der Steuerfläche 36 der stehenden Steuerscheibe 26 verbinden können. Diese dritten Steueröffnungen 58 sind jeweils über einen achsparallelen Kanal 60 mit dem Innenraum eines zylindrischen Produktgasbehälters 62 verbunden, der koaxial zur Drehachse 40 der Steuerscheibe 38 an der Unterseite der feststehenden Steuerscheibe 26 zwischen den Adsorptionskammern 10 angeordnet ist. Die Kanäle 60 sind jeweils über ein Rückschlagventil 64 absperrbar, das ein Zurückströmen von Produktgas aus dem Produktgasbehälter 62 in den jeweiligen Kanal 60 verhindert. Aus dem Produktgasbehälter kann das Produktgas über eine durch ein Ventil 66 absperrbare Produktgasleitung 68 abgezogen werden.

In der drehbaren Steuerscheibe 38 sind ferner mindestens zwei zweite Verbindungskanäle 70 ausgebilet, deren beide Endöffnungen ebenfalls in der Steuerfläche 56 der drehenden Steuerscheibe 38 liegen und so angeordnet sind, daß sie bei einer geeigneten Stellung der drehenden Steuerscheibe 38 relativ zur stehenden Steuerscheibe 26 jeweils die erste Steueröffnung 32 in der Steuerfläche 36 mit einer Restgasöffnung 72 in der Steuerfläche 36 der stehenden Steuerscheibe 26 verbinden, die ihrerseits mit einer Restgasleitung 74 in Verbindung steht. Diese ist von einem zylindri-

- 13 -

0107179

schen Rohr gebildet, das den Produktgasbehälter 62 koaxial zur Drehachse 40 durchsetzt. Durch diese Restgasleitung wird die adsorbierte Gasfraktion während des Desorptionstaktes abgezogen.

In der Fig. 1 erkennt man ferner einen den Produktgasbehälter 62 koaxial umgebenden weiteren zylindrischen Behälter 76, der als Zwischenspeicher für einen Teil des Produktgases dient und über ein Ventil 78 mit der Produktgasleitung 68 verbindbar ist. Der Zwischenspeicher 76 ist über achsparallele Kanäle 80 in der stehenden Steuerscheibe 26 jeweils mit vierten und fünften Steueröffnungen 82 bzw. 84 (siehe Fig. 5) in der Steuerfläche 36 der stehenden Steuerscheibe 26 verbunden, die ihrerseits über einen Verlängerungsabschnitt 86 des ersten Verbindungskanales 54 mit den zweiten Steueröffnungen 58 verbindbar sind, wie dies in der Fig. 1 für die rechte Adsorptionskammer 10 dargestellt ist.

Bevor nun anhand der Fig. 1 bis 3 und 8 ein Arbeitszyklus der soweit schematisch beschriebenen Vorrichtung erläutert wird, soll zunächst anhand der Fig. 4 bis 6 eine konkrete Ausführungsform der Steuerscheibenanordnung für eine Vorrichtung mit fünf Adsorptionskammern beschrieben werden.

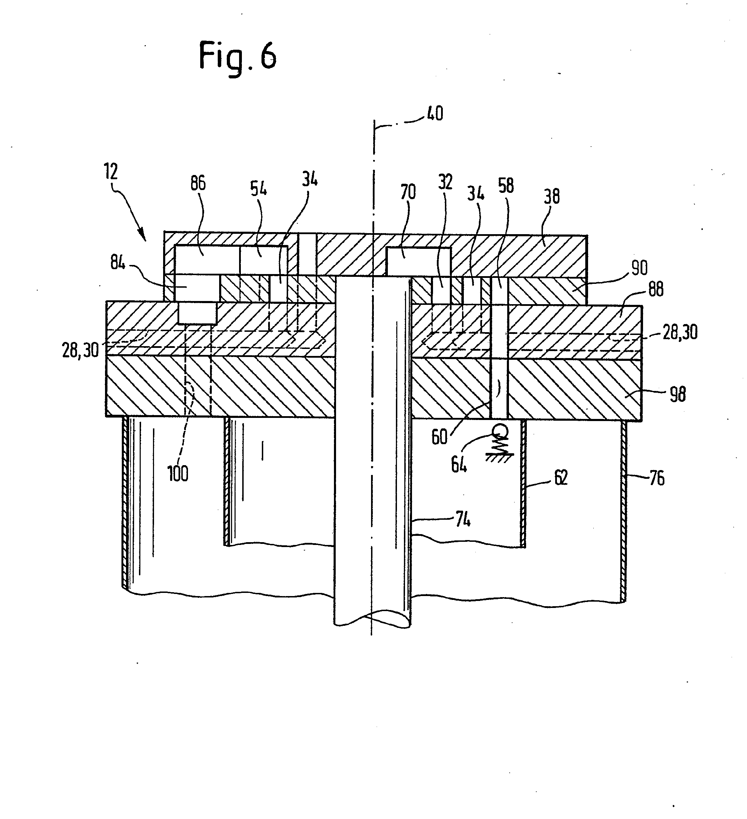

Die Fig. 4 zeigt zunächst eine Draufsicht auf die Steuerfläche 36 der feststehenden Steuerscheibe 26, die nach der Darstellung in Fig. 6 aus einer ersten durchmessergrößeren Teilscheibe 88 und einer zweiten durchmesserkleineren Teilscheibe 90 besteht, die starr miteinander verbunden sind. In der zweiten Teilscheibe 90 sind jeweils in regelmäßigen Winkelabständen voneinander - jeweils von radial innen nach radial außen betrachtet - fünf 1., 2. und 3. Steueröffnungen 32, 34 bzw. 58 in Form von Steuerschlitzen aus-

gebildet, welche kreisbogenförmig um die durch den Mittelpunkt der Scheiben 88 und 90 verlaufende Drehachse 40 gekrümmt sind und die zweite Teilscheibe 90 vollständig durchsetzen. Die Steuerschlitze 32 und 34 sind jeweils über eine achsparallele Sackbohrung 92 bzw. 94 in der ersten Teilscheibe 88 mit einer radialen Bohrung verbunden, die sich in der ersten Teilscheibe 88 bis zu deren Umfangsrand 96 erstreckt. Diese beiden Bohrungen bilden den Einlaßkanal 28 bzw. Auslaßkanal 30. An ihrer jeweiligen Öffnung in der Umfangsfläche 96 der ersten Teilscheibe 88 können die Einlaßleitung 22 bzw. die Auslaßleitung 24 einer Adsorptionskammer 10 angeschlossen werden.

Der radial äußere Steuerschlitz 58 ist mit einer den Kanal 60 bildenden achsparallelen Bohrung in der ersten Teilscheibe 88 verbunden. Diese Bohrung durchsetzt ferner einen Behälterflansch 98, welcher den Produktgasbehälter 62 und den Zwischenspeicher 76 nach oben hin abschließt, wie dies die Fig. 6 zeigt.

Wie man in der Fig. 4 erkennt, erstrecken sich die zweiten Steuerschlitze 34 jeweils über einen größeren Winkelbereich als die zugehörigen ersten und dritten Steuerschlitze 32 bzw. 58. Der Zweck dieser Maßnahme wird im weiteren noch näher erläutert. In dem Winkelbereich zwischen zwei aufeinander folgenden ersten und dritten Steuerschlitzen 32 bzw. 58 sind radial außerhalb von den dritten Steuerschlitzen 58 die vierten und fünften Steueröffnungen 82 bzw. 84 in Form von radial gerichteten geraden Schlitzen in der zweiten Teilscheibe 90 ausgebildet. Sie stehen mit dem durchmessergrößeren Abschnitt einer achsparallelen Bohrung 100 in Verbindung, welche die erste Teilscheibe 88 und den Behälterflansch 98 durchsetzt und

0107179

in den Zwischenspeicher 76 mündet.

Die Restgasöffnung 72 schließlich ist von einer die beiden Teilscheiben 88 und 90 sowie den Behälterflansch 98 durchsetzenden axialen Bohrung gebildet, an deren unteres Ende sich die Restgasleitung 74 anschließt.

Fig. 5 zeigt eine Draufsicht auf die Unterseite, d.h. die Steuerfläche 56 der drehbaren Steuerscheibe 38. Die drehbare Steuerscheibe 38 besitzt den gleichen Durchmesser wie die zweite Teilscheibe 90 der feststehenden Steuerscheibe 26. Auf einem Kreis, dessen Radius gleich dem mittleren Krümmungsradius der ersten Steuerschlitze 32 in der zweiten Teilscheibe 90 ist, sind an diametral gegenüberliegenden Stellen die beiden Einlaßkanäle 52 ausgebildet, welche die drehbare Steuerscheibe 38 vollständig durchsetzen. Auf dem die beiden Einlaßkanäle 52 verbindenden Durchmesser ist jeweils nach radial außen eine den ersten Verbindungskanal 54 bildende längliche Aussparung ausgebildet, die sich von dem radial inneren Rand des zweiten Steuerschlitzes 34 bis zum radial äußeren Rand des dritten Steuerschlitzes 58 erstreckt, so daß sie diese beiden Steuerschlitze 34 und 58 miteinander verbindet, wenn sie mit diesen Steuerschlitzen in Deckung kommt. An die Aussparung 54 schließt sich der Verlängerungsabschnitt 86 in Form eines radial gerichteten schmalen Schlitzes an, der mit der Aussparung 54 in Verbindung steht und der zur Herstellung einer Verbindung zwischen den Steuerschlitzen 82 bzw. 84 und dem in Umfangsrichtung über den ersten und dritten Steuerschlitz 32 bzw. 58 hinausragenden Abschnitt des zweiten Steuerschlitzes 34 dient.

Wie man aus einem Vergleich der Figuren 4 und 5 erkennt, ist der Abstand zwischen zwei aufeinanderfolgenden zweiten Steuerschlitzen 34 geringer als die in Umfangsrichtung gemessene Ausdehnung der Aussparung 54, so daß zwei aufeinanderfolgende Steuerschlitze 34 kurzzeitig durch die Aussparung 54 verbindbar sind.

In der Steuerfläche 56 der drehbaren Steuerscheibe 38 sind ferner zwei weitere diametral zueinander verlaufende radiale längliche Aussparungen vorgesehen, welche die zweiten Verbindungskanäle 70 bilden und sich jeweils von dem Kreis mit dem mittleren Krümmungsradius der ersten Steuerschlitze 32 nach radial innen bis in einen Bereich hinein erstrekken, der in seinem Durchmesser dem Durchmesser der Restgasöffnung 72 oder der Restgasleitung 74 entspricht. Die gemeinsame Mittelachse der beiden zweiten Verbindungskanäle 70 bildet mit dem durch die Einlaßkanäle 52 und die Aussparungen 54 verlaufenden Durchmesser einen Winkel von ca. 81°.

In Verbindung mit der Fig. 7 soll nun die Arbeitsweise der anhand der Figuren 1 bis 6 beschriebenen Vorrichtung erläutert werden.

Zur Verdeutlichung der Beschreibung wurden in der Fig. 4 die den fünf Adsorptionskammern zugeordneten Sektoren mit Steuerschlitzen im Uhrzeigersinn fortschreitend von 1 bis 5 numeriert. Dreht man die in der Fig. 5 dargestellte Steuerscheibe 38 im Uhrzeigersinn gegenüber der feststehenden Steuerscheibe 26 soweit, bis einer der Einlaßkanäle 52 in Deckung mit dem ersten Steuerschlitz 32 des Sektors 1 tritt, wobei gleichzeitig der zugehörige Verbindungskanal 54 den zweiten und dritten Steuerschlitz 34 bzw. 58 des Sektors 1 miteinander verbindet, so beginnt für die angeschlossene Adsorptionskammer 10 der Adsorptionstakt, der in der Fig. 7 mit A bezeichnet ist. Dieser Zustand ist in der Fig. 1 für die linke Adsorptionskammer 10 dargestellt. Man erkennt, daß das zu trennende Gasgemisch, beispielsweise Druckluft aus der Einlaßkammer 46 durch den Einlaßkanal 52, den ersten Steuerschlitz 32, den Kanal 28 und die Einlaßleitung 22 in die Adsorptionskammer 10 eintritt. In dem Trockenmittel 20 wird die Druckluft zunächst getrocknet. Dann wird in dem Adsorptionsmittel 18 der Luftstickstoff weitgehend adsorbiert und eine mit Sauerstoff stark angereicherte Fraktion verläßt die Adsorptionskammer an ihrem unteren Ende und gelangt über die Auslaßleitung 24, den Kanal 30, den zweiten Steuerschlitz 34, den Verbindungskanal 54, den dritten Steuerschlitz 58, den Kanal 60 und das Rückschlagventil 64 in den Produktgasbehälter 62.

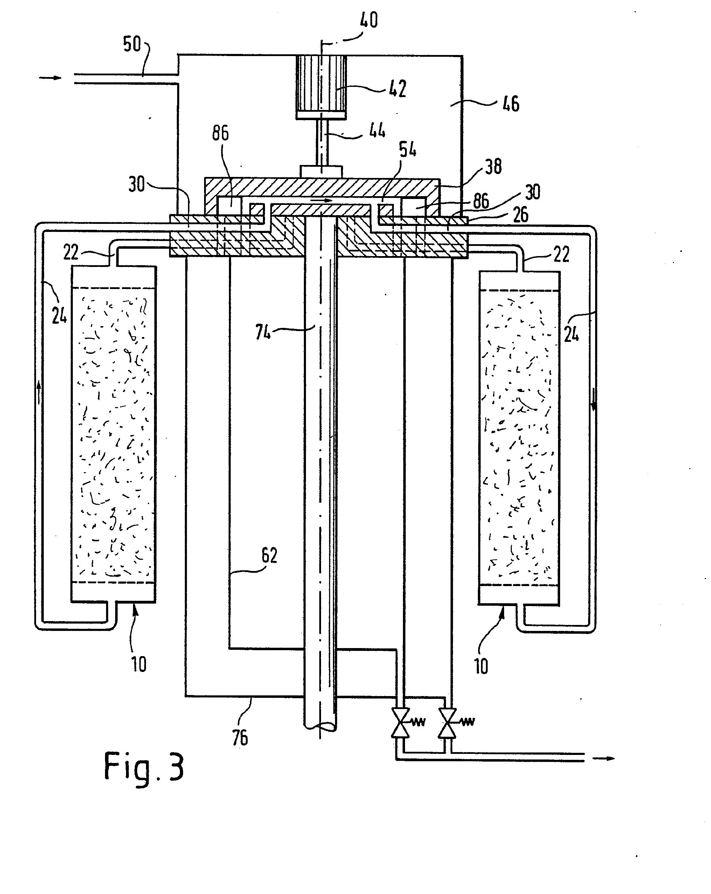

Beim Weiterdrehen der drehbaren Steuerscheibe 38 endet der Adsorptionstakt, wenn Einlaßkanal 52 und der Verbindungskanal 54 den Bereich des ersten Steuerschlitzes 32 bzw. den Bereich des dritten Steuerschlitzes 58 verlassen haben. Der noch mit dem zweiten Steuerschlitz 34 in Verbindung stehende Verbindungskanal 54 gelangt über seinen Verlängerungsabschnitt 86 mit dem Steuerschlitz 84 in Verbindung, wobei noch Produktgas, d. h. die mit Sauerstoff angereicherte Gasfraktion durch den Kanal 80 in den Zwischenspeicher 76 gelangt, in dem ein gegenüber dem Produktgasspeicher 62 geringerer Druck herrscht. Dieser Takt ist in Fig. 7 mit H bezeichnet und nimmt nur eine sehr kurze Zeit in Anspruch. Nach Beendigung des Taktes H tritt der Verbindungskanal 54 in Verbindung mit dem zweiten Steuerschlitz 34 des Sektors 2, wobei er gleichzeitig noch in Verbindung mit dem zweiten Steuerschlitz des Sektors 1 steht. Auf diese Weise erfolgt zwischen der dem Sektor 1 zugehörigen Adsorptionskammer und der dem
Sektor 2 zugehörigen Adsorptionskammer, die vorher desorbiert wurde, und in der daher ein gegenüber der Adsorptionskammer des Sektors 1 niedrigerer Druck herrscht, ein
Druckausgleich, wie dies in der Fig. 3 schematisch dargestellt ist. Dabei gelangt mit Sauerstoff angereichertes
Gas aus der linken Adsorptionskammer über deren Auslaßleitung 24, den Kanal 30, den zweiten Steuerschlitz 34,
den Verbindungskanal 54 und die gleichen Öffnungen und
Kanäle der rechten Adsorptionskammer in deren unteres Ende.
Der Druck in den beiden Kammer pendelt sich annähernd auf
einem Mittelwert zwischen dem Adsorptionsdruck in der
linken Kammer und dem Desorptionsdruck in der rechten
Kammer ein, wie dies die den Druckverlauf wiedergebende
gestrichelte Linie in der Fig. 7 zeigt. Der den Druckausgleich wiedergebende Abschnitt in der Fig. 7 ist mit DA
bezeichnet.

Bei der weiteren Drehung der Steuerscheibe 38 gelangt der
Verlängerungsabschnitt 86 des Verbindungskanales 54 in
Deckung mit der schlitzförmigen Steueröffnung 82 und verbindet somit den Zwischenspeicher 76 mit der Auslaßleitung 24 der dem Sektor 2 angeschlossenen Adsorptionskammer.
Dieser Zustand ist in der Fig. 1 für die rechte Adsorptionskammer dargestellt. Es gelangt somit Produktgas aus
dem Zwischenspeicher über die Auslaßleitung in die Adsorptionskammer, um dort den Druck noch weiter zu erhöhen.

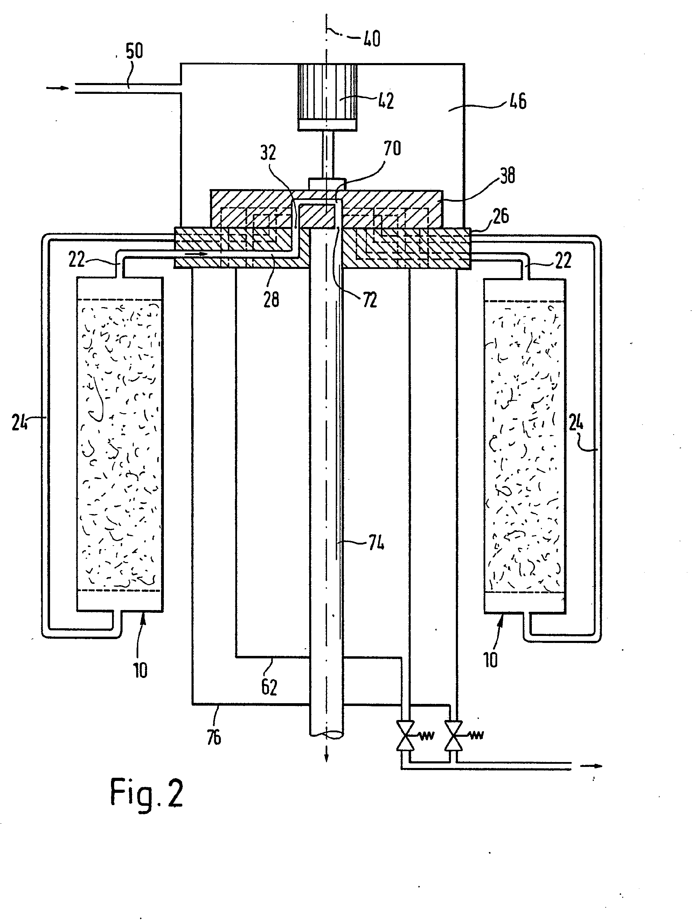

Während nun in der dem Sektor 2 angeschlossenen Adsorptionskammer der Adsorptionstakt beginnt, ist für die dem
Sektor 1 angeschlossene Adsorptionskammer nach dem Druckausgleich eine Totzeit eingetreten, bis die dem ersten
Steuerschlitz 32 dieses Sektors zugeordnete Öffnung des
zweiten Verbindungskanales 70 zur Deckung mit dem ersten Steuerschlitz gelangt. Dann beginnt für diese Adsorptionskammer der Desorptionstakt, in dem durch eine Druckerniedrigung das an dem Adsorptionsmittel adsorbierte Gas, d.h. im vorliegenden Beispiel der Luftstickstoff wieder desorbiert und über die Einlaßleitung, den Kanal 28, den ersten Steuerschlitz 32, den Verbindungskanal 70 und die Restgasöffnung 72 in die Restgasleitung 74 geleitet wird. Dieser Betriebszustand ist in der Fig. 2 für die linke Adsorptionskammer dargestellt. Die Totzeit zwischen dem Druckausgleich und dem Desorptionstakt kann verkürzt oder ganz vermieden.werden, wenn die den ersten Steuerschlitzen 32 zugeordnete Eintrittsöffnung des zweiten Verbindungskanales 70 über einen entsprechenden Sektor verlängert wird, wie dies durch die gestrichelte Linie 102 in der Fig. 5 angedeutet ist. Dadurch wird die Desorptionsphase gegenüber der Adsorptionsphase erheblich verlängert. Das Adsorptionsmaterial wird gründlicher von dem adsorbierten Restgas befreit, so daß beim darauffolgenden Adsorptionstakt mehr Stickstoff adsorbiert werden kann und eine höhere Anreicherung an Sauerstoff in der nicht adsorbierten Gasfraktion erzielt wird.

Wie die Fig. 7 erkennen läßt, überschneiden sich die Adsorptions- und Desorptionstakte der verschiedenen Adsorptionsbehälter in der Weise, daß stets in mindestens einem der Adsorptionsbehälter ein Adsorptionsvorgang stattfindet und somit Produktgas erzeugt wird. Diese Taktverschiebung in den einzelnen Adsorptionskammern rührt daher, daß 2n + 1 Adsorptionskammern n Einlaßkanäle, n erste Verbindungskanäle und n zweite Verbindungskanäle gegenüberstehen. Dadurch wird ein synchrones Umschalten der Arbeitstakte in den einzelnen Adsorptionskammern vermieden, das zu einer stoßweisen Abgabe von Produktgas führen würde. Die Abgabe von Produktgas wird umso gleichmäßiger, je mehr Adsorptionskammern vorgesehen sind, deren Arbeitstakte in der oben
beschriebenen Weise gegeneinander versetzt sind.

Die vorstehend beschriebene Vorrichtung kann mit einem
Druckwechsel zwischen Überdruck und Normaldruck, Normaldruck und Unterdruck oder auch Überdruck und Unterdruck
betrieben werden. Bevorzugt wird im allgemeinen ein Betrieb zwischen Normaldruck und Unterdruck, da ein solcher Betrieb weniger Energieaufwand erfordert.

Insbesondere, wenn die Vorrichtung mit einem Druckwechsel zwischen Überdruck und Normaldruck betrieben
wird, kann der letzte Teil der Desorptionsphase auch
durch einen Spültakt ersetzt werden. Dies ist in Fig. 7
schematisch durch den Bereich SP angedeutet, der von dem
Rest des die Desorptionsphase kennzeichnenden Bereiches
durch eine gestrichelte Linie getrennt ist.

Der Spültakt erfordert eine Änderung an der beweglichen
Steuerscheibe, die in Fig. 12 dargestellt ist, wobei die
mit der Scheibe gemäß Fig. 5 übereinstimmenden Teile
mit den gleichen Bezugszeichen zuzüglich eines Striches
bezeichnet sind.

Gegenüber der Ausführungsform gemäß Fig. 5 ist die Eintrittsöffnung 102' des Verbindungskanales 70' etwas verkürzt, so daß die Desorptionsphase früher endet. Auf
einem Kreis mit dem mittleren Krümmungsradius der
Steuerschlitze 58 sind - einander diametral gegenüberliegend - zwei axiale Bohrungen 103 vorgesehen, deren
Durchmesser so klein gewählt ist, daß die Bohrungen nicht
zwei aufeinanderfolgende Steuerschlitze 58 miteinander
verbinden können. Jede der Bohrungen 103 ist über einen
innerhalb oder außerhalb der beweglichen Steuerscheibe 38' verlaufenden Kanal 105 mit einem kreisförmig gekrümmten Steuerschlitz 107 verbunden, dessen Abstand
vom Scheiben-Mittelpunkt so gewählt ist, daß er die
vierten und fünften Steueröffnungen 82 bzw. 84 bei
einer Drehung der Steuerscheibe 38' kreuzt. Die in Umfangsrichtung gemessene Länge des Steuerschlitzes 107
ist so bemessen, daß das untere Ende einer Adsorptionskammer zwischen dem Ende der Desorptionsphase und dem
Beginn des Druckausgleiches mit dem Zwischenspeicher
76, verbunden ist. Somit wird das Adsorptionsbett in
der Adsorptionskammer vor Beginn der neuen Adsorptionsphase mit Produktgas aus dem Zwischenspeicher unter Verdrängung des Restgases gespült.

Fig. 8 zeigt eine den Figuren 1 bis 3 entsprechende Darstellung einer weiteren Ausführungsform der Erfindung.
Die in der Fig. 8 schematisch dargestellte Vorrichtung
stimmt in wesentlichen Teilen mit der Vorrichtung gemäß den Figuren 1 bis 3 überein, so daß gleiche Teile mit
gleichen Bezugszeichen bezeichnet und nicht noch einmal
beschrieben werden.

Das wesentliche Unterscheidungsmerkmal der mit einem
Druckwechsel zwischen Überdruck und Unterdruck betriebenen Vorrichtung gemäß Fig. 8 gegenüber der vorher
beschriebenen Vorrichtung besteht darin, daß der Desorptionstakt in zwei Phasen abläuft, wobei die am Ende
des Adsorptionstaktes in einer Adsorptionskammer in Form
von Druck gespeicherte potentielle Energie in der ersten
Desorptionsphase dazu verwendet wird, den Druck in der
im Zyklus vorausgegangenen Adsorptionskammer zu erniedrigen, die sich dann in ihrer zweiten Desorptionsphase befindet.

Zu diesem Zweck ist der Abstand zwischen den zweiten Steuerschlitzen 34 mindestens so groß wie die in Umfangsrichtung gemessene Breite der Verbindungskanäle 54 gewählt, so daß ein Druckausgleich zwischen im Zyklus aufeinanderfolgenden Adsorptionskammern nicht stattfinden kann. Ferner ist anstelle des bisherigen zweiten Verbindungskanales 70 eine Gasstrahlpumpe vorgesehen, die in der Fig. 8 schematisch dargestellt und allgemein mit 104 bezeichnet ist. Das in die Düse 106 der Gasstrahlpumpe 104 mündende Eintrittsrohr 108 ist mit einer die drehbare Steuerscheibe 38 durchsetzenden achsparallelen Bohrung 110 verbunden, deren Mittelpunkt auf einem Kreis mit dem mittleren Krümmungsradius der ersten Steuerschlitze 32 liegt und dessen Winkelabstand zu dem - in Drehrichtung der Steuerscheibe 38 betrachtet - vor ihm liegenden Einlaßkanal 52 ca. 70° beträgt. Das Austrittsrohr 112 der Gasstrahlpumpe 104 mündet in einen die drehbare Steuerscheibe 38 achsparallel durchsetzenden Kanal 114, der seinerseits in die Restgasleitung 74 mündet. Die Saugleitung 116 der Gasstrahlpumpe 104 ist an eine die drehbare Steuerscheibe 38 achsparallel durchsetzende Bohrung 118 angeschlossen, deren Mittelpunkt wiederum auf demselben Kreis wie der Mittelpunkt der Bohrung 110 liegt und von diesem einen Winkelabstand von ca. 40° hat. Die Gasstrahlpumpe 104 ist in der Fig. 5 durch strichpunktierte Linien angedeutet.

Die Arbeitstakte für die in der Fig. 8 dargestellte Vorrichtung sowie der Druckverlauf in den Adsorptionskammern sind in dem Diagramm der Fig. 9 dargestellt. Der Adsorptionszyklus verläuft wie bei der vorher beschriebenen Vorrichtung, wobei das zu zerlegende Gasgemisch mit Überdruck in die Einlaßkammer gepumpt wird. Auch die Abgabe von Produktgas an den Zwischenspeicher während des mit H bezeichneten Taktes verläuft wie bei der vorher beschriebenen Vorrichtung. Der Druckausgleich mit der im Zyklus folgenden Adsorptionskammer entfällt dagegen, so daß zu Beginn der Desorptionsphase in der zu desorbierenden Kammer noch annähernd der während der Adsorptionsphase gültige Betriebsdruck herrscht. Tritt nun zu Beginn des Desorptionstaktes der Kanal 110 in Verbindung mit dem ersten Steuerschlitz 32, so strömt das Restgas aus der betreffenden Kammer über den Kanal 110, das Eintrittsrohr 108, die Düse 106, das Austrittsrohr 112 und den Kanal 114 in die Restgasleitung 74 ein. Dabei wird über das Saugrohr 116 und den Kanal 118 aus der im Zyklus vorangegangenen Kammer durch Erzeugung eines Unterdruckes weiteres Restgas abgesaugt, bis in der mit dem Eintrittsrohr der Gasstrahlpumpe 104 verbundenen Adsorptionskammer annähernd Atmosphärendruck erreicht ist. Bei der weiteren Drehung der Steuerscheibe 38 bleibt dann der Druck in der betrachteten Adsorptionskammer konstant, bis der Kanal 110 und damit das Eintrittsrohr 108 der Gasstrahlpumpe 104 in Verbindung mit dem ersten Steuerschlitz 32 der im Zyklus nachfolgenden Adsorptionskammer tritt und somit für die betrachtete Adsorptionskammer die zweite Desorptionsphase beginnt, in welcher nun durch die Erzeugung des Unterdruckes mittels der Gasstrahlpumpe 104 weiteres Restgas abgesaugt wird.

Auch bei dieser Ausführungsform kann auf ähnliche Weise wie bei der vorher beschriebenen Ausführungsform zwischen die beiden Desorptionsphasen ein Spültakt eingeschoben werden, wie das in der Fig. 9 durch den mit SP bezeichneten Bereich angedeutet ist.

Der Grundgedanke, die am Ende des Adsorptionstaktes in einer Adsorptionskammer gespeicherte Energie dazu zu nutzen, um in einer anderen Kammer über eine Gasstrahlpumpe einen Unterdruck zu erzeugen, läßt sich natürlich auch bei einer Druckwechseladsorptionsanlage anwenden, die nicht mit einer Steuerscheibenanordnung der vorstehend beschriebenen Art sondern mit einzelnen Ventilen arbeitet. Eine solche Anordnung ist schematisch in Fig. 10 dargestellt. Die Vorrichtung umfaßt vier Adsorptionskammern 120, die jeweils über ein Einlaßventil 122 und eine Einlaßleitung 124 an eine Sammelleitung 126 angeschlossen sind, über die beispielsweise Druckluft den Adsorptionskammern zugeführt werden kann. Am anderen Ende der Adsorptionskammern 120 wird das Produktgas jeweils über Ventile 128 und eine Produktgasleitung 130 abgezogen. Das am Ende des Adsorptionstaktes anfallende Produktgas mit etwas geringerem Druck kann über Ventile 132 einem Zwischenspeicher 134 zugeführt werden, von dem es über ein Ventil 136 wiederum in die Produktgasleitung 130 gelangen kann.

Die Desorption erfolgt während einer ersten Desorptionsphase jeweils über ein Ventil 138 und eine Leitung 140, die mit der Düse einer schematisch angedeuteten Gasstrahlpumpe 142 verbunden ist. Deren Saugrohr 144 ist jeweils über ein Ventil 146 mit der im Zyklus vorangegangenen Adsorptionskammer verbunden.

Fig. 11 zeigt in einem Diagramm den Ablauf der einzelnen Arbeitstakte in den vier Adsorptionskammern, die in den Figuren 10 und 11 mit den Ziffern 1 bis 4 durchnumeriert sind. Die Vorrichtung arbeitet mit einem Überdruck von 3 Bar während des Adsorptionstaktes und mit einem Unterdruck von max. 0,5 Bar während der zweiten Desorptionsphase. Der Druckverlauf in den Adsorptionskammern ist durch die gestrichelten Linien in Fig. 11 wiedergegeben. Die Buchstaben A und D bezeichnen wiederum den Adsorptions- bzw. Desorptionstakt, während mit S der Takt bezeichnet wird, währenddessen die jeweilige Adsorptionskammer mit dem Zwischenspeicher 134 in Verbindung steht. Die arabischen Ziffern in den Taktfeldern bezeichnen die zu dem jeweiligen Zeitpunkt geöffneten Ventile. Zu Beginn des Adsorptionstaktes wird zunächst nur das Ventil 122 geöffnet, und der Druck von annähernd Atmosphärendruck auf 3 Bar erhöht. Erst dann wird das Ventil 128 geöffnet, um Produktgas aus der Adsorptionskammer zu entnehmen.

Während der ersten Phase des Desorptionstaktes wird beispielsweise in der Adsorptionskammer 1 das Ventil 138 geöffnet, so daß das Restgas über dieses Ventil und die Leitung 140 durch die Düse der Gasstrahlpumpe 142 ausströmt, die mit ihrem Saugrohr 144 über das ebenfalls geöffnete Ventil 146 an die Adsorptionskammer 4 angeschlossen ist, in der somit die zweite Desorptionsphase abläuft. Zwischen den beiden Desorptionsphasen eines Desorptionstaktes gibt es eine gewisse Totzeit, die durch senkrechte gestrichelte Linien in dem jeweiligen Desorptionstakt dargestellt ist.

Auch bei dieser Ausführung kann diese Totzeit in vorteilhafter Weise als Spülzeit genutzt werden, indem bei weiterhin geöffnetem Ventil 138, aber geschlossenem Ventil 146 (Kammern 1 und 4) und gering geöffnetem Ventil 132 (Kammer 1) Produktgas, z.B. $O_2$-reiches Gas aus dem Zwischen-Speicher bei niedrigem Druck Restgas, z.B. $N_2$-haltiges Gas verdrängt, bevor die zweite Desorptionsphase beginnt.

Nach der Beendigung des jeweiligen Desorptionstaktes wird die jeweilige Adsorptionskammer wieder kurzzeitig über das Ventil 132 an den Zwischenspeicher angeschlossen, so daß der Druck in der Adsorptionskammer durch Produktgas auf etwa Atmosphärendruck angehoben wird, bevor der nächste Adsorptionstakt durch Öffnen des Ventiles 122 beginnt.

P a t e n t a n s p r ü c h e

1. Vorrichtung zum Zerlegen eines Gasgemisches durch selektive Adsorption einer Gemischfraktion, umfassend eine Mehrzahl von ein Adsorptionsmittel enthaltenden Kammern mit jeweils einem Einlaß für das Gasgemisch und einem von dem Einlaß durch das Adsorptionsmittel getrennten Auslaß für die nicht adsorbierte Gemischfraktion, wobei die Kammern zyklisch nacheinander in einem Adsorptionstakt mit dem Einlaß an eine Gasquelle und mit dem Auslaß an eine Produktgasleitung und während eines Desorptionstaktes mit ihrem Einlaß bei gleichzeitiger Sperrung des jeweiligen Auslasses an eine Restgasleitung anschließbar sind, dadurch g e k e n n z e i c h n e t ,

a) daß die Einlässe (22) und die Auslässe (24) der Kammern (10) mit ersten und zweiten Steueröffnungen (32 bzw. 34) verbunden sind, die in einer achsnormalen Steuerfläche (36) einer feststehenden Steuerscheibe (26) ausgebildet sind, die eine Einlaßkammer (46) für das Gasgemisch begrenzt;

b) daß jeder Kammer (10) eine mit der Produktgasleitung (68) verbundene dritte Steueröffnung (58) in der feststehenden Steuerscheibe (26) zugeordnet ist;

c) daß in der feststehenden Steuerscheibe (26) eine mit der Restgasleitung (24) verbundene Restgasöffnung (72) ausgebildet ist;

d) daß der feststehenden Steuerscheibe (26) eine gegenüber dieser drehbare und innerhalb der Einlaßkammer (46) angeordnete Steuerscheibe (38) zugeordnet ist, die mit ihrer Steuerfläche (56) dicht abschließend an der feststehenden Steuerscheibe (26) anliegt, und

e) daß in der drehbaren Steuerscheibe (38) mindestens zwei der Steuerfläche (56) mit der Einlaßkammer (46) verbindende Einlaßkanäle (52) und mindestens zwei Verbindungskanäle (54, 70) vorgesehen sind, deren beide Enden jeweils in der Steuerfläche (56) der drehbaren Steuerscheibe (38) liegen und von denen der eine (erster Verbindungskanal 54) während des Adsorptionstaktes die jeder Kammer (10) zugeordnete zweite und dritte Steueröffnung (34, 58) miteinander verbindet, während der andere (zweite) Verbindungskanal (70) während des Desorptionstaktes die jeder Kammer (10) zugeordnete erste Steueröffnung (32) mit der Restgasöffnung (72) verbindet.

2. Vorrichtung nach Anspruch 1, dadurch g e k e n n - z e i c h n e t , daß die Kammern (10) kreisförmig in gleichmäßigen Winkelabständen um die Steuerscheiben (26, 38) herum angeordnet sind.

3. Vorrichtung nach Anspruch 1 oder 2, dadurch g e k e n n - z e i c h n e t , daß die Restgasöffnung (72) von einer axialen Bohrung in der feststehenden Steuerscheibe (26) gebildet ist, an die sich nach der der drehbaren Steuerscheibe (38) entgegengesetzten Seite ein die Restgasleitung (74) bildendes Rohr anschließt, und daß koaxial zu dem Rohr ein durchmessergrößerer Produktgasbehälter (62) angeordnet ist, der an seinem mit der feststehenden Steuerscheibe (26) verbundenen Ende mit allen dritten Steueröffnungen (58) über die feststehende Steuerscheibe (26) achsparallel durchsetzende Auslaßkanäle (60) verbunden ist und an den die mit einem Ventil (66) absperrbare Produktgasleitung (68) angeschlossen ist.

4. Vorrichtung nach Anspruch 3, dadurch g e k e n n - z e i c h n e t , daß die dritten Steueröffnungen (58) mit dem Produktgasbehälter (62) über Rückschlagventile (64) verbindbar sind.

5. Vorrichtung nach einem der Ansprüche 1 bis 4, dadurch g e k e n n z e i c h n e t , daß die ersten, zweiten und dritten Steueröffnungen jeweils von konzentrisch zur Drehachse (40) der drehbaren Steuerscheibe (38) kreisbogenförmig gekrümmten Steuerschlitzen (32, 34 bzw. 58) gebildet sind.

6. Vorrichtung nach Anspruch 5, dadurch g e k e n n - z e i c h n e t , daß die ersten, zweiten und dritten Steuerschlitze (32, 34 bzw. 58) jeweils innerhalb eines einer Kammer (10) zugeordneten Sektors auf Kreisbogen mit unterschiedlichen Radien angeordnet sind.

7. Vorrichtung nach Anspruch 5 oder 6, dadurch g e - k e n n z e i c h n e t , daß die feststehende Steuer- scheibe (26) aus einer radiale und achsparallele Bohrungen (28, 30, 92, 94, 100) enthaltenden ersten Teilscheibe (88) und einer die Steuerschlitze (32, 34, 58, 82, 84) enthaltenden zweiten Teilscheibe (90) besteht.

8. Vorrichtung nach einem der Ansprüche 1 bis 7, dadurch g e k e n n z e i c h n e t , daß die Mittelpunkte der in der Steuerfläche (56) der drehbaren Steuerscheibe (38) liegenden Öffnungen des Einlaßkanales (52) und des jeweils zugehörigen ersten Verbindungskanales (54) auf einer radialen Linie liegen.

9. Vorrichtung nach einem der Ansprüche 1 bis 8, dadurch g e k e n n z e i c h n e t , daß 2n+1 Kammern (10) und jeweils n Einlaßkanäle (52), n erste und n zweite Verbindungskanäle (54 bzw. 70) vorgesehen sind, wobei n eine ganze Zahl bezeichnet.

10. Vorrichtung nach Anspruch 9 , dadurch g e k e n n - z e i c h n e t , daß n mindestens gleich 2 ist.

11. Vorrichtung nach einem der Ansprüche 6 bis 10, dadurch g e k e n n z e i c h n e t , daß sich die zweiten Steuerschlitze (34) über einen größeren Winkelbereich als die ersten und dritten Steuerschlitze (32 bzw. 58) erstrecken.

12. Vorrichtung nach Anspruch 11, dadurch g e k e n n - z e i c h n e t , daß der Abstand zwischen zwei in Drehrichtung aufeinanderfolgenden zweiten Steuerschlitzen (34) kleiner als die in Drehrichtung gemessene Breite der den zweiten Steuerschlitzen (34) zugeordneten Öffnung des ersten Verbindungskanales (54) in der drehbaren Steuerscheibe (38) ist.

13. Vorrichtung nach Anspruch 11 oder 12, dadurch g e k e n n z e i c h n e t , daß der Produktgasbehälter (62) koaxial von einem zylindrischen Zwischenspeicher (76) umgeben ist, der an seinem der feststehenden Steuerscheibe (26) nahen Ende über in dieser ausgebildete weitere Kanäle (80) jeweils mit vierten und fünften Steueröffnungen (82 bzw. 84) in der Steuerfläche (36) der feststehenden Steuerscheibe (26) verbunden ist, die jeweils in dem Winkelbereich ausgebildet sind, um den die zweiten Steuerschlitze (34) über die ersten und dritten Steuerschlitze (32 bzw. 58) hinausragen, wobei der Zwischen- speicher (76) mit der Produktgasleitung (68) verbindbar ist, und daß der erste Verbindungskanal (54) einen radial gerichteten Verlängerungsabschnitt (86) aufweist, der nach Abschluß eines Adsorptionstaktes und vor dem Beginn eines Adsorptionstaktes einer Kammer (10) die zweite Steueröffnung (34) mit der vierten und fünften Steueröffnung (82 bzw. 84) verbindet.

14. Verfahren zum Zerlegen eines Gasgemisches durch selektive Adsorption einer Gemischfraktion mittels einer Mehrzahl von ein Adsorptionsmittel enthaltenden Kammern, in die jeweils während eines Adsorptionstaktes das Gasgemisch unter Druck eingeleitet wird bei gleichzeitiger Ableitung der nicht adsorbierten Gasfraktion und aus denen jeweils während eines Desorptionstaktes durch Druckerniedrigung das adsorbierte Restgas wieder entfernt wird, wobei die Kammern zyklisch nacheinander in den Adsorptions-Desorptionskreislauf eingeschaltet werden, dadurch g e k e n n z e i c h n e t , daß der Druck in den Kammern (10; 120) während einer ersten Desorptionsphase auf annähernd Atmosphärendruck und in einer zweiten Desorptionsphase unter Atmosphärendruck abgesenkt wird und daß die Druckabnahme während der ersten Desorptionsphase in einer Kammer (10; 120) zur Erzeugung des Unterdruckes in der im Zyklus vorausgegangenen Kammer (10; 120) verwendet wird.

15. Verfahren nach Anspruch 14 , dadurch g e k e n n - z e i c h n e t , daß das ausströmende Restgas während der ersten Desorptionsphase durch die Düse einer Gasstrahlpumpe (104; 142) geleitet wird, deren Saugseite gleichzeitig mit der Einlaßseite der im Zyklus vorausgegangenen Kammer (10; 120) verbunden wird.

16. Vorrichtung zur Durchführung eines Verfahrens nach Anspruch 14 oder 15 , umfassend eine Mehrzahl von ein Adsorptionsmittel enthaltenden Kammern mit jeweils einem Einlaß für das Gasgemisch und einem von dem Einlaß durch das Adsorptionsmittel getrennten Auslaß für die nicht absorbierte Gemischfraktion, wobei die Kammern zyklisch nacheinander in einem Adsorptionstakt mit dem Einlaß an eine Gasquelle und mit dem Auslaß an eine Produktgasleitung und während eines Desorptionstaktes mit ihrem Einlaß bei gleichzeitiger Sperrung des jeweiligen Auslasses an eine Restgasleitung anschließbar sind, dadurch g e k e n n z e i c h n e t , daß der Einlaß (22) der jeweiligen Kammer (10; 120) während einer ersten Desorptionsphase mit der Düse einer Gasstrahlpumpe (104; 142) verbindbar ist, deren Austrittsrohr (112) mit der Restgasleitung (74) verbunden ist und an deren Saugseite (116; 144) der Einlaß der im Zyklus vorausgegangenen, eine zweite Desorptionsphase durchlaufenden Kammer (10; 120) anschließbar ist.

17. Vorrichtung nach Anspruch 16 und einem der Ansprüche 1 bis 11 und 13, dadurch g e k e n n z e i c h n e t , daß der zweite Verbindungskanal von dem Eintritts- und dem Austrittsrohr (108 bzw. 112) der Gasstrahlpumpe (104) gebildet ist, deren Sauganschluß (116) mit einer weiteren, den ersten Steuerschlitzen (32) zugeordneten Öffnung in der Steuerfläche (56) der drehbaren Steuerscheibe (38) verbunden ist, wobei der Abstand dieser Öffnung von der Eintrittsöffnung des Eintrittsrohres (108) mindestens gleich dem Abstand zwischen zwei aufeinanderfolgenden ersten Steuerschlitzen (32) und der Abstand von der Öffnung des in Drehrichtung nachfolgenden Einlaßkanales (52) mindestens gleich der Bogenlänge eines ersten Steuerschlitzes (32) ist.

Fig. 1

Fig.2

Fig.3

Fig. 4

# Fig. 5

## Fig. 6

# Fig.7

0107179

Fig.8

# Fig.9

0107179

## Fig. 10

## Fig. 11

$|\ SP\ |$ = SPÜLTAKT

0107179

Fig.12